# EUROPEAN PATENT SPECIFICATION

(11) **EP 0 494 222 B1**
(45) Date of publication and mention of the grant of the patent: **07.06.1995**
(21) Application number: 90914797.7
(22) Date of filing: 20.09.1990
(51) Int. Cl.: B29C 47/00

(54) **Method and device for thermosetting plastic extrusion**
Verfahren und Vorrichtung zum Extrudieren warmaushärtender Kunststoffe
Procédé et dispositif pour extruder des matières plastiques durcisables à chaud

(30) Priority: 25.09.1989 SE 8903143
(43) Date of publication of application: 15.07.1992
(73) Proprietor: APPLICATOR SYSTEM AB, S-435 33 Mölnlycke (SE)
(72) Inventor: SAND, Kjell, S-421 58 Västra Frölunda (SE)
(74) Representative: Roth, Ernst Adolf Michael
(86) International application number: PCT/SE90/00602
(87) International publication number: WO 91/04103

(56) References cited:
- US-A- 4 368 219

## Description

The present invention refers to a method and a device for reducing pulsations from a pump at thermosetting plastic extrusion, by balancing the pressure of a component in a first hose by means of pressure of a second component in a second hose, during the supply of the components with substantially the same pressure to an extrusion head, where the flow rate of the second component is substantially below the flow rate of the first component.

The dosing and forward feeding of the components is commonly carried out by means of piston pumps, which causes the hoses to enter into a self oscillating state at the forward and reverse action of the pump piston. A remaining pulsation is obtained which leads to an exact dosing being impossible, particularly if the dosing quantity is very small, which is the case at thermosetting plastic extrusion, where the setting agent only constitutes about 1-4 volume-%. Even at shut-off of the extrusion head the hose is somewhat extended, which contributes to incorrect dosing.

In US-A-4,368,219, a method and apparatus for coating a long tube of small diameter by means of inserting a supplying hose of double structure, with a spray nozzle ahead to two separately extending inner and outer hoses for supplying paint and compressed air are described. The invention is used to stop the drip of the paint from the nozzle after paint job. The inner hose is pressurized by means of the pressurized air in the outer hose, and the cross section area of the inner hose is deformed, ie. compressed. When the paint job is completed, the flow of the paint and air is stopped, causing the inner hose recover its original form, ie. enlarge, and suck back the paint from the nozzle.

The object of the invention is to avoid the above stated problems and provide a method and device for thermosetting plastic extrusion where pressure changes in the supply hoses do not influence the flow ratio between the components.

This has been solved by letting at least during a part of the path to the extrusion head the pressure from the first component in the first hose act on the second component supplied in the second hose which during at least one part of the path to the extrusion head extends inside a hose in which the pressure of the first component acts.

The invention will be described more in detail with reference to an embodiment shown in the accompanying drawing.

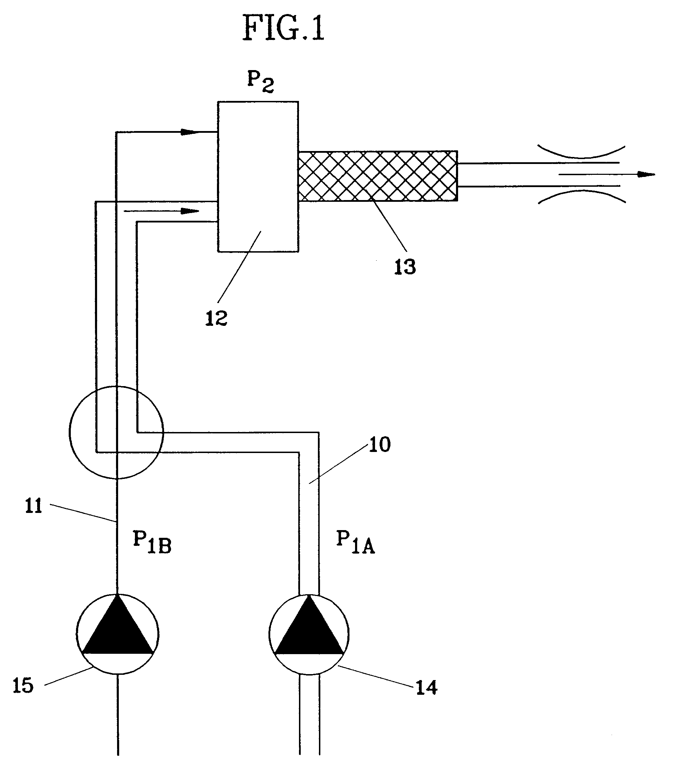

Fig. 1 is a diagrammatic explanatory outline of a device according to the invention.

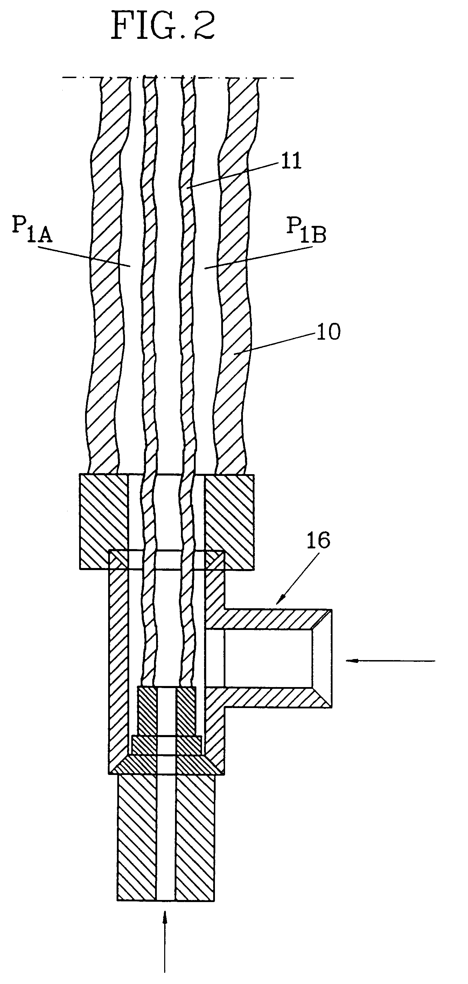

Fig. 2 is a section through a part of the pressure balanced hose corresponding to encircled part in fig. 1.

In the drawing the reference numbers 10 and 11 designate two hoses for supply of a first and a second component, namely plastic and setting agent, to a mixing chamber 12 to an extrusion heads 13. The components are fed forward with substantially the same pressure P_{1A} ≈ P_{2A} by means of piston pumps 14 and 15. The flow of the second component substantially decreases the flow of the first component.

The second hose 11 is via a branch pipe 16 conducted into the first hose 10 and then extends inside the first hose 10 over a substantial part of its length before the components are mixed in the mixing chamber 12. The pressure P₂ in this is essentially the same as in the hoses 10 and 11.

Since P_{1A} ≈ P_{2A}, that is the same pressure on the out and inside of the second hose 11, this will not extend at pressure variations in the forward feeding. The flow fed forward of the second component will be substantially constant in time.
Pressure changes in connection with the piston movements or at shut-off of the extrusion head thus will not influence the flow ratio between the first and the second component.

## Claims

1. A method for thermosetting plastic extrusion, whereby a first component (A) in a first hose (10) and a second component (B) in a second hose (11) are supplied at the same pressure to an extrusion head (13) by means of piston pumps (14, 15), the second component (B) being different from the first component (A) and the flow rate of the second component (B) being substantially below the flow rate of the first component (A), **characterized** in that the pressure of the two components (A, B) is balanced by extending the second hose (11) at least during a part of the path from the piston pumps (14, 15) to the extrusion head (13) inside the first hose (10), so that the pressure (P1A) of the first component (A) acts on the pressure (P1B) of the second component (B).

2. A device for thermosetting plastic extrusion, comprising a first hose (10) for a first component (A) and a second hose (11) for a second component (B), the components (A, B) being supplied at the same pressure via the hoses (10, 11) to an extrusion head (13) by means of piston pumps (14, 15), the second component (B) being different from the first component (A) and the flow rate of the second component (B) being substantially below the flow rate of the first component (A), **characterized** in that the second hose (11) extends inside the first hose (10) at least during a part of the path from the piston pumps (14, 15) to the extrusion head (13) for pressure actuation of the first component (A) on the second component (B).

## Patentansprüche

1. Verfahren zum Extrudieren warm aushärtender Kunststoffe, wobei eine erste Komponente (A) in einem ersten Schlauch (10) und eine zweite Komponente (B) in einem zweiten Schlauch (11) bei demselben Druck einem Extrusionskopf (13) mittels Kolbenpumpen (14, 15) zugeführt werden, wobei die zweite Komponente (B) von der ersten Komponente (A) verschieden ist, und der Durchsatz der zweiten Komponente (B) im wesentlichen unterhalb des Durchsatzes der ersten Komponente (A) liegt, dadurch gekennzeichnet, daß der Druck der beiden Komponenten (A, B) dadurch ausgeglichen wird, daß sich der zweite Schlauch (11) wenigstens auf einem Teil des Weges von den Kolbenpumpen (14, 15) zum Extrusionskopf (13) innerhalb des ersten Schlauches (10) erstreckt, so daß der Druck (P1A) der ersten Komponente (A) auf den Druck (P1B) der zweiten Komponente (B) einwirkt.

2. Vorrichtung zum Extrudieren warm aushärtender Kunststoffe mit einem ersten Schlauch (10) für eine erste Komponente (A) und einem zweiten Schlauch (11) für eine zweite Komponente (B), wobei die Komponenten (A, B) unter demselben Druck über Schläuche (10, 11) einem Extrusionskopf (13) mittels Kolbenpumpen (14, 15) zugeführt werden, wobei die zweite Komponente (B) von der ersten Komponente (A) verschieden ist, und der Durchsatz der zweiten Komponente (B) wesentlich unter dem Durchsatz der ersten Komponente (A) liegt, dadurch gekennzeichnet, daß sich der zweite Schlauch (11) innerhalb des ersten Schlauches (10) wenigstens über einen Teil des Weges von den Kolbenpumpen (14, 15) zum Extrusionskopf (13) erstreckt, zwecks Druckeinwirkung der ersten Komponente (A) auf die zweite Komponente (B).

## Revendications

1. Procédé pour extruder des matières plastiques durcissables à chaud, dans lequel un premier composant (A) dans un premier tuyau (10) et un second composant (B) dans un second tuyau (11) sont amenés sous une même pression à une tête d'extrusion (13) au moyen de pompes à piston (14, 15), le second composant (B) étant différent du premier composant (A) et le débit du second composant (B) étant sensiblement inférieur au débit du premier composant (A), caractérisé en ce que la pression des deux composants (A, B) est équilibrée en faisant passer le second tuyau (11), au moins pendant une partie du trajet allant des pompes à piston (14, 15) à la tête d'extrusion (13), à l'intérieur du premier tuyau (10), de telle sorte que la pression (P1A) du premier composant (A) agisse sur la pression (P1B) du second composant (B).

2. Dispositif pour extruder des matières plastiques durcissables à chaud, comprenant un premier tuyau (10) pour un premier composant (A) et un second tuyau (11) pour un second composant (B), les composants (A, B) étant amenés à la même pression par les tuyaux (10, 11) à une tête d'extrusion (13) au moyen de pompes à piston (14, 15), le second composant (B) étant différent du premier composant (A) et le débit du second composant (B) étant sensiblement inférieur au débit du premier composant (A), caractérisé en ce que le second tuyau (11) passe à l'intérieur du premier tuyau (10), au moins pendant une partie du trajet allant des pompes à piston (14, 15) à la tête d'extrusion (13), pour faire agir la pression du premier composant (A) sur le second composant (B).
